(19) **Europäisches Patentamt**

**European Patent Office**

**Office européen des brevets**

(11) **EP 0 505 594 B2**

(12) **NOUVEAU FASCICULE DE BREVET EUROPEEN**

(45) Date de publication et mention de la décision concernant l'opposition:
**24.07.1996 Bulletin 1996/30**

(51) Int. Cl.⁶: $A23G\ 1/00$, $A23G\ 1/04$

(45) Mention de la délivrance du brevet:
**12.01.1994 Bulletin 1994/02**

(21) Numéro de dépôt: **91104934.4**

(22) Date de dépôt: **28.03.1991**

(54) **Base sèche formée d'un mélange de sucre cristallisé, de cacao et d'autres ingrédients et son procédé d'obtention**

Trockengrundmaterial aus kristallisiertem Zucker, Kakao und anderen Zutaten und Verfahren zu seiner Herstellung

Dry base material made up of crystallized sugar, cocoa and other ingredients and process for making the same

(84) Etats contractants désignés:
**AT BE CH DE DK ES FR GB GR IT LI LU NL SE**

(43) Date de publication de la demande:
**30.09.1992 Bulletin 1992/40**

(73) Titulaire: **SOCIETE DES PRODUITS NESTLE S.A.**
**CH-1800 Vevey (CH)**

(72) Inventeur: **Caly, William Guy**
**F-25370 Jougne (FR)**

(56) Documents cités:
**BE-A- 649 013        CA-A- 835 323**
**CA-A- 1 073 732      US-A- 3 472 658**

## Description

La présente invention est relative à une base sèche formée d'un mélange de sucre cristallisé, de cacao et d'autres ingrédients, ainsi qu'à un procédé d'obtention.

La présente invention a plus particulièrement pour objet une base sèche du type ci-dessus destinée à être utilisée dans un distributeur automatique de boissons chaudes.

Les produits destinés à ce secteur d'activité doivent satisfaire à des exigences très précises.

En premier lieu, ces produits doivent avoir des caractéristiques de stockage satisfaisantes et, plus particulièrement, ils doivent être aussi peu sensibles que possible à l'humidité. Ils doivent donc être aussi faiblement hygroscopiques que possible. De plus, ces produits étant formés d'un mélange de sucre et de cacao, qui sont deux éléments de densités différentes, il ne doit pas apparaître au cours du temps de phénomènes de ségrégation, par sédimentations différentielles du sucre et du cacao, qui entraîneraient les produits les plus denses au fond du réservoir de stockage.

En second lieu, ces produits étant destinés à être utilisés dans un parc de machines existant, ils doivent présenter des caractéristiques d'écoulement déterminées et reproductibles afin d'obtenir la fourniture d'une dose constante et déterminée de ces produits à chaque consommation, sans qu'il soit par ailleurs nécessaire de modifier le réglage de ces doseurs. Les doseurs habituellement utilisés sont par exemple des doseurs Spengler ou Wittenborg qui sont réglés pour délivrer des doses reproductibles, par exemple de 25 g, à partir des produits normalement commercialisés dans ces dispositifs.

En troisième lieu, les produits doivent se dissoudre instantanément dans l'eau chaude sans qu'il soit par ailleurs nécessaire de remuer la boisson, par exemple à la cuillère.

Enfin toutes ces caractéristiques doivent être obtenues en utilisant des recettes déterminées.

Les produits qui sont habituellement utilisés sont constitués d'un mélange à sec de sucre cristallisé et de poudre de cacao avec éventuellement de la poudre de lait et des additifs tels que du sel ou de l'extrait de vanille.

Ces produits présentent donc inévitablement une tendance marquée à la sédimentation différentielle. De plus, le sucre libre est très sensible à l'humidité ce qui pose des problèmes de stockage.

On connaît, par le document CA 1.073.732, un procédé dans lequel un sucre très fin, d'une granulométrie inférieure à 250 µm, est humidifié avec 3% d'eau, un mélange de cacao et d'additifs étant préparé séparément, le sucre et le mélange étant ensuite introduits dans un mélangeur chauffé à une température comprise entre 50°C et 90°C à une vitesse de montée en température de 1,5°C à 13°C par minute. Le produit est ensuite refroidit rapidement et réduit en poudre avec une densité finale de 500 à 600 g par litre et une répartition granulométrique dans laquelle 100% du produit à une granulométrie inférieure à 840 µm et 60% à une granulométrie supérieure à 250 µm.

Dans ce document, la densité mentionnée correspond à ce qui est classiquement appelé la masse volumique apparente versée. Il est en effet habituel de distinguer la masse volumique apparente versée, calculée sur une poudre venant d'être versée dans un récipient gradué, et la masse volumique apparente libre calculée sur une poudre tassée selon un mode opératoire déterminé après 100 tapotements.

Pour plus de détails sur les masses volumiques apparentes versée et libre on pourra se reporter à la norme FIL (Fédération Internationale de Laiterie) numéro 134:1986 qui explique les modes opératoires exacts. Dans le reste de la description, les masses volumiques apparentes versée et libre ont été mesurées selon la méthode exprimée dans cette norme.

Le produit obtenu par le procédé exlicité dans le document CA 1.073.732 présente un problème majeur. Il n'est en effet pas possible d'obtenir une reproductibilité de l'écoulement de ce produit, les conditions régissant cet écoulement n'étant absolument pas maîtrisées, ni même simplement abordées, dans ce document. Ce qui est au demeurant normal puisque ce produit n'est pas destiné à une utilisation dans un distributeur automatique, comme le montrent le dosage à la cuillère et l'utilisation de lait chaud qui sont deux procédés inenvisageables dans le cadre d'un distributeur automatique.

La présente invention a ainsi pour objet une base sèche constituée d'un mélange de sucre cristallisé, de poudre de cacao et d'ingrédients additionnels, comprenant des grains de sucre individuels d'un diamètre moyen compris entre 250 µm et 500 µm enrobé complètement d'une couche d'un mélange de poudre de cacao et d'ingrédients additionnels, la couche ayant été formée par malaxage de sucre humidifié avec le mélange de poudre de cacao et d'ingrédients additionnels, et présentant une masse volumique apparente versée d1 comprise entre 630 g/l et 750 g/l, une masse volumique apparente libre d2 comprise entre 750 g/l et 860 g/l et un taux de compressibilité $100(d2-d1)/d2$ inférieur à 20%.

Grâce à ce taux de compressibilité faible, d'une part, et à une masse volumique apparente élevée, d'autre part, le produit présente d'excellentes caractéristiques d'écoulement permettant d'obtenir, avec les doseurs habituellement utilisés dans les distributeurs automatiques de boissons, une dose de produit sec déterminée de façon reproductible identique à celle délivrée à partir des produits normalement délivrés dans ces dispositifs, par exemple de 25 g, sans qu'il soit nécessaire de modifier le réglage des dits dispositifs de dosage.

Par ailleurs, grâce à cette structure de la base sèche, il est obtenu une poudre totalement homogène au niveau de ses grains qui ne présente donc pas de phénomènes de ségrégation entre le sucre et le cacao lors d'un stockage prolongé. Par ailleurs, les grains de sucre étant enrobé d'un mélange de poudre de cacao et d'ingrédients additionnels, le revêtement moins hydrophile que le sucre libre procure au produit des caractéristiques hygroscopiques remarquables.

La présente invention a encore pour objet un procédé d'obtention d'une base sèche, dans lequel un sucre cristallisé dont les grains présentant un diamètre moyen compris entre 250 μm et 500 μm est porté à un taux d'humidité compris entre 5% et 12% en poids, un mélange sec constitué de poudre de cacao et d'ingrédients additionnels est réalisé séparément, et le sucre humidifié est ensuite incorporé au mélange sec, malaxé, et seché, pour obtenir une base sèche comprenant des grains de sucre individuels enrobé d'une couche du mélange sec, et présentant une masse volumique apparente versée d1 comprise entre 630 g/l et 750 g/l, une masse volumique apparente libre d2 comprise entre 750 g/l et 860 g/l et un taux de compressibilité 100(d2-d1)/d2 inférieur à 20%.

D'autres caractéristiques et avantages ressortiront à la lecture de la description qui va suivre.

Dans le texte de la description qui va suivre, les masses volumiques seront exprimées en g/l. De même les granulométries seront exprimées en μm.

Pour effectuer les mesures de granulométrie, il a été utilisé utilise un dispositif laser de type Malvern. Les échantillons sont préalablement tamisés à travers un tamis de 1400 μm dans le but d'éviter la présence de quelques grosses particules qui fausseraient le résultat. Le diamètre moyen des particules est calculé à partir de trois mesures pour chaque échantillon pour que cette mesure varie dans une plage inférieure à 5%. Dans le reste de la description toutes les granulométries ont été mesurées selon cette procédure.

Dans le procédé selon la présente invention un sucre cristallisé d'un diamètre moyen compris entre 250 μm et 500 μm est humidifié jusqu'à une teneur en eau de 5% à 12% en poids. Dans cette opération d'humidification, il est ainsi réalisé un fondant de sucre dans lequel chaque grain garde son individualité en n'étant mouillé qu'en surface.

Parallèlement à cette opération, un mélange sec d'une poudre de cacao, de lait en poudre, et d'autres ingrédients tels que du sel ou de l'extrait de vanille est réalisé.

Dans une opération suivante, le mélange sec et le sucre humidifié sont introduits dans un mélangeur du type turbulent, par exemple un mélangeur à socs, puis malaxé. Au cours de cette opération, les grains de sucre humidifiés sont recouverts de mélange sec et plus le sucre est humide plus le revêtement est épais. De même plus le temps de malaxage est élevé plus le revêtement est épais.

Préférablement, le mélange total constitué par le sucre cristallisé et le mélange sec a la composition suivante en pourcentage sur le poids total de matière sèche :

| | |
|---|---|
| sucre | 45% à 60% |
| cacao | 10% à 15% |
| lait en poudre | 20% à 35% |
| autres additifs | 5% à 11% |

Le produit qui sort du mélangeur à socs est séché à l'air chaud pour individualisé chaque grain de sucre enrobé du mélange sec.

Il est ainsi obtenu un produit final présentant des qualités d'écoulement, de stockage et de dispersibilité dans de l'eau chaude le rendant apte à être utilisé dans des distributeurs automatiques de boissons chaudes.

Les exemples ci-dessous illustreront l'invention.

Dans tous les exemples ci-dessous, il sera fait référence à deux compositions différentes du produit final exprimées en pourcentage sur le poids de matière sèche.

| | Composition A | Composition B |
|---|---|---|
| Sucre | 47% | 55% |
| Lait en poudre | 33% | 22% |
| Cacao | 14% | 12% |
| Lactoserum, sel, extrait de vanille | 6% | 11% |
| Total | 100% | 100% |

Exemple 1

L'exemple ci-dessous illustre l'influence du temps de mélange du sucre humidifié et du mélange sec sur les masses volumiques apparentes versée et libre et donc sur le taux de compressibilité, l'humidification étant de 10% en poids, par rapport à la quantité de sucre. La recette employée correspond à la composition A, le diamètre moyen du sucre est de 261 µm.

| Temps de mélange (minutes) | Masse volumique apparente versée (g/l) | Masse volumique apparente libre (g/l) | Taux de compressibilité (%) |
|---|---|---|---|
| 5 | 750 | 870 | 13.8 |
| 4 | 762 | 846 | 9.6 |
| 4 | 762 | 854 | 10.4 |
| 2 | 734 | 802 | 8.5 |
| 2 | 740 | 820 | 8.9 |

On voit ainsi clairement que plus le temps de mélange est important plus le taux de compressibilité est élevé.

Exemple 2

Le tableau ci-dessous résume des résultats d'essais dans lesquels les deux recettes A et B ont été utilisées en faisant varier :

- le diamètre moyen initial du sucre
- la quantité d'eau ajoutée lors de l'humidification (exprimée en pourcentage par rapport au poids de sucre)

Lors de ces essais, il a été utilisé en permanence le même dispositif de dosage en ne modifiant pas ses paramètres de réglage, paramètres choisis pour délivrer une dose de 25 g à partir des produits normalement délivrés.

tableau

| Compte rendu des essais classés par granulométrie, quantité d'eau ajoutée au sucre et dose délivrée | | | | | | | | |
|---|---|---|---|---|---|---|---|---|
| essai recette | - | diamètre moyen du sucre (µm) | eau (%) | masse volumique apparente | | taux de compressibilité (%) | dose (g) | sédiments |
| | | | | libre (g/l) | versée (g/l) | | | |
| 1 | -B | 261 | 9 | 698 | 634 | 9.2 | 23.30 | |
| 2 | -A | 261 | 9 | 715 | 644 | 9.9 | 24.65 | |
| 3 | -A | 300 | 9 | 807 | 670 | 17.0 | 25.69 | + |
| 4 | -A | 300 | 9 | 864 | 701 | 18.9 | 26.02 | + |
| 5 | -A | 300 | 12 | 799 | 691 | 13.5 | 25.32 | + |
| 6 | -A | 300 | 12 | 810 | 738 | 8.9 | 27.58 | + |
| 7 | -A | 370 | 6 | 748 | 666 | 11.0 | 22.88 | |
| 8 | -A | 370 | 9 | 863 | 666 | 22.8 | 23.47 | |
| 9 | -A | 370 | 9 | 842 | 666 | 20.9 | 24.39 | |
| 10 | -A | 370 | 9 | 761 | 660 | 13.3 | 24.97 | + |
| 11 | -A | 370 | 9 | 799 | 723 | 9.5 | 25.05 | |
| 12 | -A | 370 | 9 | 884 | 805 | 8.9 | 28.13 | |
| 13 | -A | 370 | 12 | 775 | 716 | 7.6 | 24.66 | |
| 14 | -A | 370 | 12 | 800 | 731 | 8.6 | 25.76 | |
| 15 | -A | 370 | 12 | 766 | 701 | 8.5 | 25.91 | + |
| 16 | -B | 438 | 5 | 797 | 711 | 10.8 | 26.30 | |
| 17 | -B | 438 | 7 | 803 | 732 | 8.8 | 26.40 | |
| 18 | -B | 500 | 6 | 790 | 710 | 10.1 | 23.51 | + |
| 19 | -B | 500 | 6 | 793 | 711 | 10.3 | 24.32 | + |
| 20 | -A | 500 | 9 | 904 | 731 | 19.1 | 26.89 | +++ |
| 21 | -A | 500 | 9 | 870 | 721 | 17.1 | 27.25 | +++ |
| 22 | -A | 500 | 9 | 852 | 708 | 16.9 | 27.56 | +++ |
| 23 | -A | 500 | 9 | 898 | 781 | 13.0 | 29.41 | +++ |
| 24 | -A | 500 | 9 | 870 | 778 | 10.6 | 29.88 | +++ |
| 25 | -A | 500 | 12 | 816 | 709 | 13.1 | 25.68 | ++ |
| 26 | -A | 500 | 12 | 830 | 716 | 13.7 | 27.49 | ++ |
| 27 | -A | 500 | 12 | 908 | 848 | 6.6 | 31.68 | +++ |

Il a ensuite été mesuré, au cours de ces essais, les masses volumiques apparentes versée et libre, le taux de compressibilité, la dose délivrée et la quantité de sédiments présents au fond de la tasse. L'évaluation de la quantité de sédiments a été réalisée en attribuant à chaque essai une note comprise entre zéro et quatre croix. Il est considéré qu'une évaluation des sédiments à deux croix et plus correspond à une dispersion insuffisante de la poudre dans l'eau chaude qui, nécessitant alors une agitation ultérieure, rend la poudre inapte à être utilisée dans un distributeur automatique de boisson chaude.

Les exemples 8,9,10,11,12 et 20,21,22,23,24 montrent de façon claire que, toutes choses égales par ailleurs, le taux de compressibilité détermine la dose délivrée dans la tasse par le distributeur automatique.

Par ailleurs, il apparaît encore clairement que le taux de sédiments dans la tasse est lié de façon absolue au diamètre moyen initial du sucre, un diamètre moyen initial de 500 μm apparaissant comme étant la limite supérieure à ne pas dépasser.

En outre, plus on ajoute d'eau au sucre plus la dose délivrée augmente comme le montrent les séries d'exemples 3-6, 7-15, 18-27.

On voit que, pour les granulométries les plus faibles (essais 1 et 2), il faut rajouter 9% d'eau pour avoir une dose juste suffisante. Or cette quantité d'eau constitue la limite supérieure que l'on peut ajouter sur un sucre aussi fin. Au delà, les grains de sucre ne conservent plus leur individualité. C'est la raison pour laquelle la limite inférieure de 250 μm constitue le diamètre moyen du sucre en dessous duquel il ne faut pas descendre. D'une façon préférée, le diamètre moyen du sucre est compris entre 300 μm et 450 μm.

De plus, il apparaît que, en dehors du taux de compressibilité , la masse volumique apparente libre constitue un critère conditionnant l'écoulement du produit. Plus cette masse volumique est élevée, plus la dose est importante, c'est la raison pour laquelle, en tout état de cause, une masse volumique apparente libre de 860 g/l constitue une limite supérieure à ne pas dépasser.

Enfin, il apparaît clairement qu'en fonction de la granulomètrie du sucre utilisé et de l'addition d'eau il est possible d'obtenir de façon reproductible des doses différentes en utilisant un même doseur et en ne modifiant pas les règlages de ce dernier.

Le procédé selon la présente invention permet donc de maîtriser parfaitement les caractéristiques d'écoulement de la base sèche produite en intervenant sur la granulométrie du sucre et son taux d'humidification.

Exemple 3

Des mesures de granulométrie ont été réalisées sur les essais 1, 16 et 17 exposés à l'exemple 2. Il a été ainsi déterminé le diamètre moyen des particules constituant la base sèche.

De plus, il a été obtenu les courbes granulométriques des sucres à la base du produit ainsi que celles des bases sèches obtenues par le procédé de l'invention.

Pour une base sèche donnée, il est apparu que sa courbe granulométrique était décalée vers la droite, donc vers une granulométrie plus élevée, par rapport à la courbe granulométrique du sucre de base. Ce décalage est en fait, en première approximation, une simple translation, les profils des deux courbes granulométriques étant très voisins. En prenant des points représentatifs de ces deux courbes, il est ainsi possible de calculer une translation moyenne d'une courbe par rapport à l'autre, translation moyenne égale à deux fois l'épaisseur moyenne du revêtement de cacao sur le sucre. Il est en particulier possible d'en déduire avec une bonne approximation les épaisseurs minimale et maximale dudit revêtement.

Par ailleurs, cette analyse a montré que, très majoritairement, les grains de sucre étaient individuellement recouverts, c'est-à-dire qu'il n'y avait pas de coalescence des grains de sucre.

En effet, soit un grain de rayon R. Deux grains accolés, de même rayon, auront un volume $V = (4/3) \, \pi \, (2R^3)$ . Le rayon équivalent, qui sera donné par la méthode Malvern, sera donc $Re = (2)^{1/3} \, R$ .

Si le diamètre moyen du produit final est inférieur à 1,26 que multiplie le diamètre du produit initial, il est donc clair que les grains ne se sont pas accolés.

On peut donc comparer le diamètre moyen du sucre et le diamètre moyen du produit final que l'on aura diminué de l'épaisseur du revêtement.

Les résultats sont résumés dans le tableau ci-dessous :

| Essai | D1 diamètre moyen du sucre μm | D2 diamètre moyen du produit final μm | e épaisseur minimale du revêtement μm | (D2-2.e)/D1 |
|---|---|---|---|---|
| 1 | 261 | 388 | 12 | 1,39 |
| 16 | 438 | 453 | 37 | 0,87 |
| 17 | 438 | 489 | 25 | 1,06 |

On voit ainsi que, pour les exemples 16 et 17, même en prenant les épaisseurs minimales estimées, il est clair que les grains de sucre demeurent individualisés et ne sont pas collés deux à deux.

En revanche pour l'essai 1, on voit que, si on prend en compte l'épaisseur minimale estimée, on peut considérer que des grains sont collés deux à deux. Il faut à cet égard garder à l'esprit que cet essai a été réalisé avec une addition d'eau de 9% par rapport au poids de sucre. Ceci confirme donc que les grains de sucre, pour les faibles granulométries, perdent leur individualité. Ceci confirme par ailleurs que, si on utilise une granulométrie encore plus faible, l'addition de 9% d'eau entraînera des phénomènes encore plus importants de coalescence des grains.

On voit donc que le procédé selon la présente invention, en évitant substantiellement une coalescence des grains de sucre, permet d'obtenir une répartition granulométrique du produit final qui est directement liée à celle du sucre de base. On peut ainsi obtenir effectivement un produit final granulométriquement homogène duquel sont en particulier absents les agrégats volumineux qui présentent des caractéristiques de dispersion dans l'eau chaude nettement insuffisantes, comme le montre la nécessité d'avoir un sucre de base d'un diamètre moyen inférieur à 500 μm.

## Revendications

1. Base sèche constituée d'un mélange de sucre cristallisé, de poudre de cacao et d'ingrédients additionnels, comprenant des grains de sucre individuels d'un diamètre moyen compris entre 250 μm et 500 μm enrobé complètement d'une couche d'un mélange de poudre de cacao et d'ingrédients additionnels, la couche ayant été formée par malaxage de sucre humidifié avec le mélange de poudre de cacao et d'ingrédients additionnels, et présentant une masse volumique apparente versée d1 comprise entre 630 g/l et 750 g/l, une masse volumique apparente libre d2 comprise entre 750 g/l et 860 g/l et un taux de compressibilité 100(d2-d1)/d2 inférieur à 20%.

2. Base sèche selon la revendication 1, comprenant des grains de sucre individuels d'un diamètre moyen compris entre 300 μm et 450 μm.

3. Procédé d'obtention d'une base sèche, dans lequel un sucre cristallisé dont les grains présentent un diamètre moyen compris entre 250 μm et 500 μm est porté à un taux d'humidité compris entre 5% et 12% en poids, un mélange sec constitué de poudre de cacao et d'ingrédients additionnels est réalisé séparément, et le sucre humidifié est ensuite incorporé au mélange sec, malaxé, et seché, pour obtenir une base sèche comprenant des grains de sucre individuels enrobé d'une couche du mélange sec, et présentant une masse volumique apparente versée d1 comprise entre 630 g/l et 750 g/l, une masse volumique apparente libre d2 comprise entre 750 g/l et 860 g/l et un taux de compressibilité 100(d2-d1)/d2 inférieur à 20%.

4. Procédé selon la revendication 3, dans lequel les grains du sucre cristallisé présentent un diamètre moyen entre 300 μm et 450 μm.

## Claims

1. A dry base constituted of a mixture of crystalised sugar, cocoa powder and additional ingredients, comprising individual grains of sugar of a mean diameter of between 250 μm and 500 μm completely coated by a coating of a mixture of cocoa powder and the additional ingredients, the coating having being formed by mixing moistened sugar grains with the mixture of cocoa powder and the additional ingredients, and having a poured apparent density, d1, of between 630 g/l and 750 g/l; a free apparent density, d2, of between 750 g/l and 860 g/l; and a degree of compressibility, expressed as 100(d2-d1)/d2, of less than 20%.

2. A dry beverage base according to claim 1 in which the individual sugar grains have a mean diameter between 300 μm and 450 μm.

3. Process for producing a dry base in which crystallised sugar grains having a mean diameter of between 250 μm and 500 μm are moisten to a moisture content of from 5% to 12% by weight; a dry mixture of cocoa powder and additional ingredients is separately prepared; the moistened sugar is added to the dry mixture and mixed and dried to provide a dry base comprising individual sugar grains coated with a coating of the dry mixture and having a poured apparent density, d1, of between 630 g/l and 750 g/l; a free apparent density, d2, of between 750 g/l and 860 g/l; and a degree of compressibility, expressed as 100(d2-d1)/d2, of less than 20%.

4. A process according to claim 3 in which the crystallised sugar grains have a mean diameter of between 300 μm and 450 μm.

## Patentansprüche

1. Trockengrundmaterial aus einem Gemisch von kristallisiertem Zucker, Kakaopulver und zusätzlichen Bestandteilen, bestehend aus einzelnen Zuckerkörnern mit einem mittleren Durchmesser von 250 μm bis 500 μm, die mit einer Schicht eines Gemisches aus Kakaopulver und zusätzlichen Bestandteilen vollständig umhüllt sind, wobei die Schicht durch Mischen von angefeuchtetem Zucker mit dem Gemisch aus Kakaopulver und zusätzlichen Bestandteilen gebildet wurde, mit einer Schüttdichte d1 von 630 g/l bis 750 g/l, einer Stampfdichte d2 von 750 g/l bis 860 g/l und einem Kompressibilitätsgrad 100 (d1-d2)/d2 von weniger als 20 %.

2. Trockengrundmaterial nach Anspruch 1, bestehend aus einzelnen Zuckerkörnern mit einem mittleren Durchmesser von 300 μm bis 450 μm.

3. Verfahren zur Herstellung eines Trockengrundmaterials, bei welchem ein kristallisierter Zucker, dessen Körner einen mittleren Durchmesser von 250 μm bis 500 μm aufweisen, auf einen Feuchtigkeitsgrad von 5 bis 12 Gew.-% gebracht wird, ein aus Kakaopulver und zusätzlichen Bestandteilen bestehendes trockenes Gemisch getrennt hergestellt wird und der angefeuchtete Zucker anschließend dem trockenen Gemisch beigegeben wird, geknetet und getrocknet wird, um ein Trockengrundmaterial zu erhalten, das aus einzelnen Zuckerkörnern besteht, die mit einer Schicht des trockenen Gemisches umhüllt sind, und eine Schüttdichte d1 von 630 g/l bis 750 g/l, eine Stampfdichte d2 von 750 g/l bis 860 g/l und einen Kompressibilitätsgrad 100 (d2-d1)/d2 von weniger als 20 % aufweist.

4. Verfahren nach Anspruch 3, in dem die Körner des kristallisierten Zuckers einen mittleren Durchmesser von 300 bis 450 μm aufweisen.